# EUROPÄISCHE PATENTSCHRIFT

(11) **EP 2 001 684 B1**
(45) Veröffentlichungstag und Bekanntmachung des Hinweises auf die Patenterteilung: **16.07.2014**
(21) Anmeldenummer: 07723270.0
(22) Anmeldetag: 15.03.2007
(51) Int. Cl.: G06K 1/12, G06K 19/06, B42D 15/00

(54) **DATENTRÄGER UND VERFAHREN ZU SEINER HERSTELLUNG**
DATA STORAGE MEDIUM AND METHOD FOR MANUFACTURING IT
SUPPORT DE DONNEES ET SON PROCEDE DE FABRICATION

(30) Priorität: 27.03.2006 DE 102006014367
(43) Veröffentlichungstag der Anmeldung: 17.12.2008
(73) Patentinhaber: Giesecke & Devrient GmbH, 81677 München (DE)
(72) Erfinder: DEPTA, Georg, 83024 Rosenheim (DE); DÖRFLER, Walter, 81373 München (DE); MAYER, Karlheinz, 87544 Blaichach (DE); KARCHER, Lars, 82140 Olching (DE); HUYNH, Thanh-Hao, 83052 Bruckmühl (DE)
(86) Internationale Anmeldenummer: PCT/EP2007/002276
(87) Internationale Veröffentlichungsnummer: WO 2007/110155

(56) Entgegenhaltungen:
- EP-A- 0 372 274
- WO-A-03/095745
- WO-A-2005/108109
- DE-A- 10 353 092
- US-A- 5 061 536
- US-A1- 2004 209 049

## Beschreibung

Die Erfindung betrifft einen Datenträger mit einer visuell und/ oder maschinell erkennbaren Kennzeichnung in Form von Mustern, Buchstaben, Zahlen oder Bildern sowie ein Verfahren zur Herstellung eines derartigen Datenträgers.

Ausweiskarten, wie beispielsweise Kreditkarten oder Personalausweise, werden bereits seit längerem mittels Lasergravur mit einer individuellen Kennzeichnung versehen. Bei der Kennzeichnung durch Lasergravur werden durch geeignete Führung eines Laserstrahls die optischen Eigenschaften des Kartenmaterials in Gestalt einer gewünschten Kennzeichnung irreversibel verändert. Beispielsweise ist in der Druckschrift DE 30 48 733 A1 eine Ausweiskarte mit aufgebrachten Informationen beschrieben, die auf einer Oberfläche unterschiedliche farbige und übereinander angeordnete Schichtbereiche aufweist, die zumindest teilweise durch visuell erkennbare Personalisierungsdaten unterbrochen sind.

Neben Ausweiskarten werden auch andere fälschungsgefährdete Wertdokumente, wie Banknoten, Aktien, Anleihen, Urkunden, Gutscheine, Schecks, Eintrittskarten und dergleichen, oft mit lasergenerierten, individualisierenden Kennzeichen, wie etwa einer Seriennummer, versehen.

Soll mithilfe eines Lasers eine Farbschicht auf einem Datenträgersubstrat entfernt oder modifiziert werden, so muss diese Farbschicht zumindest teilweise eine hohe Absorption bei der Wellenlänge des Markierungslasers aufweisen. Je geringer nämlich die Absorption ist, desto höher muss der Energieeintrag des Lasers gewählt werden, um den gewünschten Effekt zu erreichen. Durch den hohen Energieeintrag werden aber meist unerwünschte Nebeneffekte in dem Substrat oder in anderen über oder unter der zu kennzeichnenden Farbschicht liegenden Schichten erzeugt.

Sind mehrere Schichten übereinander angeordnet, von denen eine tiefer liegende mit dem Laser markiert werden soll, so muss davon ausgegangen werden, dass in den bestrahlten Bereichen auch selbst nicht absorbierende Überdrucke der laserabsorbierenden Schicht mit entfernt oder modifiziert werden. Dies bedeutet, dass für eine Laserkennzeichnung ein bestimmter Platz im Design des Datenträgers reserviert werden muss, um sicherzustellen, dass nicht andere Druckbestandteile durch die Laserkennzeichnung gestört werden.

Druckschrift WO 03/095745 A1 (= D1) beschreibt ein Verfahren zur Erhöhung der Fälschungssicherheit von Papierdokumenten. Auf dem Papierdokument wird eine Transferfolie oder Laminierfolie aufgebracht, die eine lasersensitive Schicht aufweist. Dieser Mehrschichtenkörper wird sodann mit Laserstrahlung behandelt. Hierbei wird in der lasersensitiven Schicht eine laserinduzierte Markierung erzeugt, z.B. durch laserinduziertes Bleichen. Über diese laserinduzierte Markierung kann jeweils eine Individualisierung des Dokuments erfolgen. Bei der Laserbehandlung werden Energiedichten vorzugsweise zwischen 0,05 und 0,5 J pro cm² bei einer Pulsdauer von 5 bis 20 ns angewandt. Gemäß Ansprüchen 5 und 9 der D1 kann das lasersensitive Material eine Komponente enthalten, die bei der zum Bleichen eingesetzten Wellenlänge des Laserlichts Licht absorbiert, wobei aber die Komponente bei dieser Wellenlänge kein Absorptionsmaximum aufweist, sondern diese Wellenlänge außerhalb des Absorptionsmaximums oder außerhalb der Absorptionsmaxima der Komponente liegt.

Druckschrift US 2004/0209049 A1 (= D2) beschreibt das Lasermarkieren in einem retroreflektierenden Sicherheitslaminat. Gemäß Absatz [0017] wird eine Laserwellenlänge in einem Bereich zwischen 300 und 450 nm bevorzugt.

Druckschrift EP 0 372 274 A2 (= D3) beschreibt einen Aufzeichnungsträger, insbesondere eine Ausweiskarte, mit sich überlagernden, farblich kontrastierenden Schichten, in denen durch lokale Abtragung einzelne Schichtbereiche unter Freilegung tieferliegender, andersfarbiger Schichtbereiche mittels eines Laserstrahls in zumindest zum Teil humanlesbarer Form dargestellt sind, wobei unter einer ersten laserstrahldurchlässigen Farbschicht zumindest eine unter Laserstrahleinwirkung wenigstens teilweise thermisch abbaubare zweite Schicht vorhanden ist, wobei durch die Umsetzung der Laserstrahlenergie in dieser zweiten Schicht und dem damit verbundenen thermischen Abbau dieser Schicht die erste Farbschicht lokal entfernt ist.

Druckschrift US 5,061,536 B (= D4) beschreibt ein optisches Aufzeichnungsmedium mit einem Substrat, einer lichtabsorbierenden Schicht, die ein im nahen Infrarot absorbierendes Material enthält, und einer wärmeempfindlichen farbentwickelnden Schicht, wobei diese Schichten auf dem Substrat übereinander aufgebracht sind.

Druckschrift DE 103 53 092 A1 (= D5) beschreibt einen Datenträger, in den mittels eines Laserstrahls Kennzeichnungen eingebracht sind, die in Form von durch den Laserstrahl bewirkten irreversiblen Änderungen der optischen Eigenschaften des Datenträgers sichtbar sind, wobei der Datenträger eine im sichtbaren Spektralbereich opake, lasersensitive Schicht umfasst, die mit einer zumindest in einem Teilbereich metallisierten Sicherungsschicht kombiniert ist, wobei die Kennzeichnungen durch den Laserstrahl gleichzeitig und passergenau in die lasersensitive Schicht und den metallisierten Teilbereich der Sicherungsschicht eingebracht sind.

Druckschrift WO 2005/108109 A1 (= D6) beschreibt ein Wertdokument das ein Sicherheitspapier und eine mithilfe eines Lasers erzeugte Markierung aufweist, wobei das Sicherheitspapier wenigstens einen Teilbereich mit einer Beschichtung aufweist und sich die Markierung über den Grenzbereich zwischen Beschichtung und Sicherheitspapier erstreckt. Die Beschichtung weist ein Farbgemisch auf, das wenigstens eine die Laserstrahlung absorbierende Gemischkomponente und eine für die Laserstrahlung transparente Gemischkomponente aufweist. Die Beschichtung kann mehrschichtig ausgebildet sein, wobei wenigstens eine der Schichten die Markierung aufweist. Die Beschichtung kann zwei übereinander angeordnete Schichten aufweisen, wobei eine erste Schicht für die Laserstrahlung transparent ist und die zweite Schicht die Laserstrahlung absorbiert.

Ausgehend davon liegt der Erfindung die Aufgabe zugrunde, einen Datenträger der eingangs genannten Art vorzuschlagen, der eine lasergenerierte individuelle Kennzeichnung hoher Fälschungssicherheit aufweist. Insbesondere soll die Kennzeichnung wenig Platz auf dem Datenträger beanspruchen und leicht in bestehende Designs oder Druckbilder zu integrieren sein. Die Erfindung soll auch ein Verfahren zur Herstellung eines derartigen Datenträgers bereitstellen.

Diese Aufgabe wird durch das Herstellungsverfahren und die Datenträger mit den Merkmalen der unabhängigen Ansprüche gelöst. Weiterbildungen der Erfindung sind Gegenstand der Unteransprüche.

Nach der Erfindung wird bei einem Verfahren zum Herstellen eines Datenträgers mit einer visuell und/ oder maschinell erkennbaren Kennzeichnung in Form von Mustern, Buchstaben, Zahlen oder Bildern ein Datenträger mit einem Datenträgersubstrat bereitgestellt und eine Markierungsschicht auf das Datenträgersubstrat aufgebracht. Die Kennzeichnungen werden erfindungsgemäß mittels kurzer Laserpulse in die Markierungsschicht eingebracht. Eine solche Lasermarkierung mit kurzen Laserpulsen biete eine Reihe von Vorteilen gegenüber herkömmlichen Kennzeichnungsverfahren, die nachfolgend im Detail erläutert werden.

Es werden in die Markierungsschicht Kennzeichnungen eingebracht, die im sichtbaren Spektralbereich nicht erkennbar sind. Vielmehr sind die Kennzeichnungen nur im infraroten Spektralbereich, nämlich im nahen Infrarot in einem Wellenlängenbereich zwischen 780 nm und 1000 nm erfassbar. Sie stellen dann visuell nicht sichtbare Echtheitsmerkmale dar, die jedoch mit herkömmlichen Detektoren auf Siliziumbasis problemlos maschinell ausgelesen werden können.

Die Kennzeichnungen werden durch Lasermodifikation eines lasermodifizierbaren Merkmalsstoffs in der Markierungsschicht erzeugt. Dabei handelt es sich bei dem Merkmalsstoff um einen Infrarotabsorber mit einem Absorptionsmaximum im nahen Infrarot.

Die Kennzeichnungen werden mit einem Markierungslaser bei einer Wellenlänge eingebracht, die nicht dem Absorptionsmaximum des lasermodifizierbaren Merkmalsstoffs entspricht. Es wird eine Wellenlänge für die Markierung gewählt, bei der der lasermodifizierbare Merkmalsstoff im Wesentlichen keine Absorption aufweist. Diese Entkopplung von Markierungswellenlänge und Absorptionsmaximum erlaubt eine wesentlich größere Freiheit sowohl bei der Wahl der eingesetzten Merkmalsstoffe als auch bei der Wahl der verwendeten Markierungslaser.

Wird beispielsweise ein Merkmalsstoff mit einem Absorptionsmaximum im nahen Infrarot eingesetzt, beispielsweise bei einer Wellenlänge von 850 nm, so kann für die Kennzeichnung eine wesentlich weiter vom sichtbaren Spektralbereich entfernte Markierungswellenlänge, beispielsweise 1,06 µm, verwendet werden. Die Gefahr unerwünschter Beeinflussung anderer, visuell sichtbarer Farbschichten durch die Laserbeaufschlagung kann dadurch stark reduziert werden.

Möglich wird die Entkopplung von Markierungswellenlänge und Absorptionsmaximum durch den erfindungsgemäßen Einsatz kurzer Laserpulse für die Markierung, die den Merkmalsstoff überraschenderweise auch weit abseits dessen Absorptionsmaximums modifizieren können. Erfindungsgemäß weist der Merkmalsstoff bei der Markierungswellenlänge im Wesentlichen keine Absorption auf. Auf welche Weise die kurzen Laserpulse trotz einer geringen oder sogar verschwindenden Absorption des Merkmalsstoffs bei der Markierungswellenlänge die Modifikation erzeugen, ist gegenwärtig nicht verstanden. Ohne an eine bestimmte Erklärung gebunden zu sein, wird vermutet, dass die Modifikation durch nichtlineare Effekte bei hohen Laserintensitäten entsteht, wie weiter unter genauer ausgeführt.

Die Kennzeichnungen werden mit einem Markierungslaser im infraroten Spektralbereich in die Markierungsschicht eingebracht, wobei der Markierungslaser eine Wellenlänge von etwa 1,06 µm hat. Hier kommen beispielsweise Nd:YAG-Laser, Nd:YVO-Laser, Nd:Glas-Laser, Yb:Glas-Laser und dergleichen in Betracht.

Die Pulslänge der kurzen Laserpulse wird zweckmäßig kleiner als die charakteristische Zeit der Wärmediffusion in der Markierungsschicht gewählt. Diese charakteristische Zeit der Wärmediffusion kann mit der Wärmediffusionsgleichung δT/δt = D δ²T/δx² abgeschätzt werden, wobei T die Temperatur, D die Diffusionskonstante der Markierungsschicht und x eine Ortskoordinate bezeichnet. Mit dem Wärmefluss über eine charakteristische Ausdehnung r ist danach eine charakteristische Zeitdauer τ der Größenordnung τ ≈ r²/D verbunden. Ist die Pulslänge eines Laserpulses kürzer als diese charakteristische Zeitdauer τ, so kann sich die bei der Absorption erzeugte Wärme während der Dauer des Laserpulses in der Markierungsschicht nur innerhalb der charakteristischen Ausdehnung verteilen.

In einer vorteilhaften Ausgestaltung des Verfahrens werden die Kennzeichnungen mit Laserpulsen einer Pulslänge von weniger als 100 ns, bevorzugt weniger von als 50 ns, besonders bevorzugt von weniger als 30 ns in die Markierungsschicht eingebracht. Pulslängen von weniger als 10 ns oder sogar von weniger als 1 ns kommen ebenfalls in Betracht.

Neben der Pulslänge sind auch die Pulsrate des Markierungslasers und die mittlere Leistung des Lasers von Bedeutung. Zur Erzeugung komplexer Markierungen mit hoher Produktionsgeschwindigkeit ist eine hohe Pulsrate (> 20 kHz, vorzugsweise > 30 kHz), eine hohe mittlere Leistung (zumindest einige Watt, vorzugsweise einige 10 W), und eine kurze Pulsdauer der Einzelpulse erforderlich. Diese teilweise gegenläufigen Anforderungen können bei sorgfältige Auswahl und Optimierung des eingesetzten Markierungslasers gleichzeitig erfüllt werden.

In weiteren Erfindungsvarianten wird das so genannte "First Peak"-Phänomen eingesetzt. Als "First Peak" wird die Leistungsspitze eines Lasers beim Beginn der Laserung bezeichnet.

Im Lasermedium wird durch geeignete Energiezufuhr ("Pumpen") eine Besetzungsinversion der Energieniveaus erzeugt; d. h. Zustände höherer Energie sind stärker besetzt als Zustände niedrigerer Energie. Während der Laserung wird der Abbau dieser Energieniveaus stimuliert, dabei wird Energie in Form von Laserlicht frei (Light Amplification by Stimulated Emission of Radiation).

Festkörperlaser werden so betrieben, dass das Pumplicht kontinuierlich eingeschaltet ist und die Laserstrahlung durch Öffnen eines Verschlusses oder des Güteschalters ("Q-switch") im Resonator entnommen wird. Zuvor hat sich eine hohe Besetzungsinversion aufgebaut, die instantan abgebaut wird und zu einer hohen Leistungsspitze führt (First Peak), sobald der Verschluss oder Güteschalter geöffnet wird. Danach erfolgen die weiteren Pulse oder der cw-Betrieb (cw: continuous wave, kontinuierlicher Wellenzug) auf einem niedrigeren Gleichgewichts-Leistungsniveau, da zwischen zwei Pulsen nie genügend Zeit besteht, eine so vollständige Besetzungsinversion wie am Anfang aufzubauen. Der Unterschied zwischen dem ersten und den folgenden Pulsen ist umso kleiner, je größer der Abstand zwischen den einzelnen Pulsen bzw. je niedriger die Frequenz der Pulse ist.

Dieser First Peak ist im Allgemeinen auch bei Lasermarkierungen zu erkennen durch eine stärkere Markierung, einen stärkeren Effekt oder einen abweichenden Effekt am Beginn eines Markierungsvektors. So kann er z. B. bei einer Markierung in eine metallisierte Folie am Beginn einer Kennzeichnung durch einen größeren Punkt gekennzeichnet sein oder bei einer Markierung in eine Farbe, bei der die Farbe entfernt wird, durch einen dunkleren Fleck im Papier, der auch fühlbar sein kann.

Zumindest Teile der erfindungsgemäßen Kennzeichnung können durch den "First Peak" hervorgehoben werden und dienen als Verifikationsmerkmal für eine gelaserte Kennzeichnung. Je nach Ausgestaltung dieser so modifizierten Kennzeichnung kann die Veränderung auch nicht mehr mit bloßem Auge erkannt werden, sondern nur noch mit einer Lupe oder einem Bildverarbeitungssensor, so dass ein höherer Sicherheitslevel erreichbar ist.

In einer vorteilhaften Erfindungsvariante wird als Markierungsschicht ein Gemisch aus einer lasertransparenten Gemischkomponente und einer durch die Laserstrahlung modifizierbaren Gemischkomponente aufgebracht. Alternativ kann als Markierungsschicht auch eine Schichtenfolge aus zwei oder mehr Schichten aufgebracht werden, wobei zumindest eine erste Schicht für die Laserstrahlung transparent und zumindest eine zweite Schicht durch die Laserstrahlung modifizierbar ist.

In beiden Varianten kann die Markierungsschicht über einer visuell sichtbaren Druckschicht aufgebracht werden. Die Markierungsschicht selbst kann mittels Stichtiefdruck oder auch vollflächig aufgebracht, insbesondere aufgedruckt werden. Wird die Markierungsschicht im Stichtiefdruck ausgeführt, enthält sie zweckmäßig neben dem Merkmalsstoff eine Stichfarbe. In allen Gestaltungen kann die Markierungsschicht neben dem Merkmalsstoff weitere Farb- und/ oder Sicherheitspigmente, wie etwa optisch variable Farbpigmente oder magnetische Pigmente, enthalten.

Gemäß einer weiteren vorteilhaften Ausgestaltung der Erfindung wird über der Markierungsschicht zumindest eine die Markierungsschicht tarnende, für die Laserstrahlung transparente Schicht aufgebracht. Als Tarnschicht kann insbesondere eine Druckschicht, insbesondere eine vollflächige Druckschicht oder eine Stichtiefdruckschicht eingesetzt werden.

Die Erfindung enthält auch einen Datenträger, insbesondere ein Wertdokument oder Sicherheitspapier, mit einem Substrat und einer auf dem Substrat aufgebrachten Markierungsschicht, in die durch Einwirkung von Laserstrahlung visuell und/ oder maschinell erkennbare Kennzeichnungen in Form von Mustern, Buchstaben, Zahlen, graphischen Codes (z. B. Barcodes, Matrixcodes) oder Bildern eingebracht sind. Nach der Erfindung enthält die Markierungsschicht des Datenträgers zumindest einen lasertransparenten Stoff und einen lasermodifizierten Merkmalstoff, der bei der Laserwellenlänge im Wesentlichen keine oder nur eine geringe Absorption aufweist. Insbesondere liegt das Absorptionsmaximum des lasermodifizierten Merkmalstoffs mit Vorteil abseits der Laserwellenlänge, wie oben erläutert.

Die Markierungsschicht kann dabei ein Gemisch aus einer lasertransparenten Gemischkomponente und einer durch die Laserstrahlung modifizierten Gemischkomponente aufweisen, oder sie kann eine Schichtenfolge aus zwei oder mehr Schichten darstellen, wobei zumindest eine erste Schicht für die Laserstrahlung transparent und zumindest eine zweite Schicht durch die Laserstrahlung modifiziert ist.

In einem weiteren Erfindungsaspekt enthält die Erfindung einen Datenträger der oben genannten Art, bei dem die Markierungsschicht eine Schichtenfolge aus zwei oder mehr Schichten darstellt, wobei eine erste, für die Laserstrahlung transparente Schicht über einer zweiten, durch die Laserstrahlung modifizierten Schicht angeordnet ist.

In allen genannten Gestaltungen kann die Markierungsschicht des Datenträgers über einer visuell sichtbaren Druckschicht angeordnet sein. Die Markierungsschicht selbst kann durch eine Stichtiefdruckschicht oder durch eine vollflächige Druckschicht gebildet sein. Über der Markierungsschicht kann zumindest eine die Markierungsschicht tarnende, für die Laserstrahlung transparente Schicht angeordnet sein, wobei diese Tarnschicht beispielsweise durch eine Druckschicht, insbesondere eine vollflächige Druckschicht oder eine Stichtiefdruckschicht, gebildet ist.

Die Kennzeichnungen der Markierungsschicht sind im sichtbaren Spektralbereich nicht erkennbar, sondern sind nur im infraroten Spektralbereich, nämlich in einem Wellenlängenbereich zwischen 780 nm und 1000 nm, maschinell erfassbar.

Das Substrat des Datenträgers kann aus Papier, einer Folie oder einem Papier-Folien-Laminat gebildet sein. Der Datenträger selbst stellt beispielsweise ein Sicherheitselement, ein blattförmiges Wertdokument oder den Kartenkörper einer Ausweiskarte, Kreditkarte oder dergleichen dar.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer gekennzeichneten Banknote nach einem Ausführungsbeispiel der Erfindung,
- Fig. 2: einen Querschnitt durch die Banknote von Fig.1 entlang der Linie II-II im Bereich der eingeschriebenen Kennzeichnung,
- Fig. 3: schematisch das Reflexionsspektrum eines infrarotabsorbierenden Merkmalsstoffs vor der Laserbeaufschlagung (durchgezogene Kurve) und nach der Laserbeaufschlagung (gestrichelte Kurve), und
- Fig. 4 bis 8: Querschnitte wie in Fig. 2 durch Datenträger nach weiteren Ausführungsbeispielen der Erfindung.

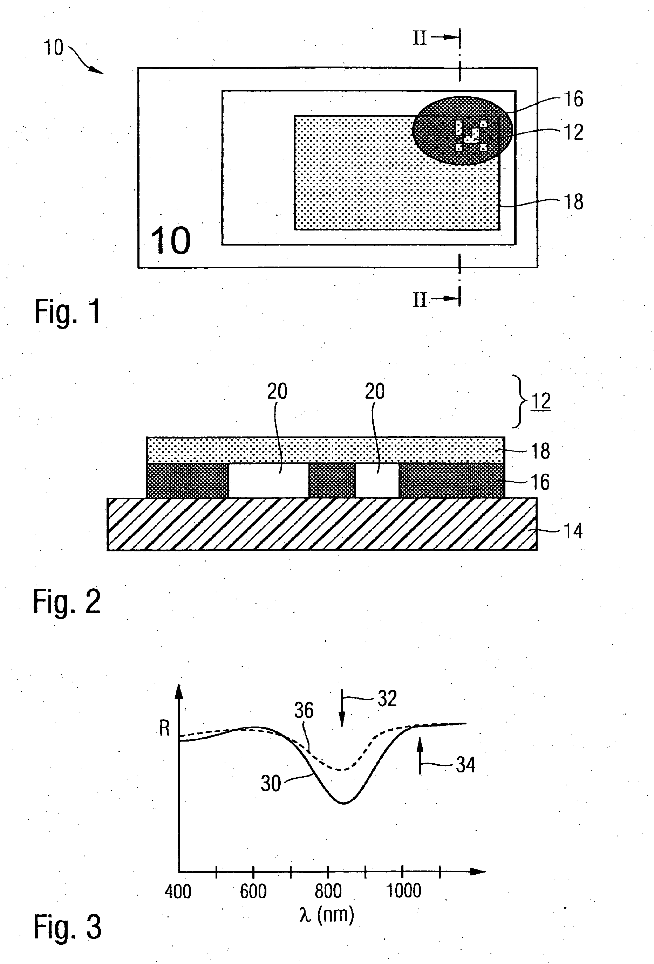

Die Erfindung wird zunächst anhand der Figuren 1 und 2 am Beispiel einer Banknote näher erläutert. Fig. 1 zeigt dazu eine schematische Darstellung einer Banknote 10, die mit einer nur im infraroten Spektralbereich maschinell erfassbaren Kennzeichnung 12 versehen ist, wie etwa dem in der Figur angedeuteten zweidimensionalen Matrixcode. Fig. 2 zeigt einen Querschnitt durch die Banknote 10 entlang der Linie II-II von Fig. 1 im Bereich der Kennzeichnung 12.

Wie in Zusammenschau der Figuren 1 und 2 zu erkennen ist, weist das Banknotensubstrat 14 eine Markierungsschicht 16 und eine für die Laserstrahlung des Markierungslasers transparente Druckschicht 18 auf. Die Markierungsschicht 16 enthält einen infrarotabsorbierenden Merkmalsstoff, dessen Absorptionsmaximum beispielsweise bei etwa 850 nm liegt. In den lasermodifizierten Bereichen 20 ist die Absorption des Merkmalsstoffs bei 850 nm deutlich reduziert, so dass die eingeschriebene Kennzeichnung 12 mit herkömmlichen Bildverarbeitungssensoren auf Siliziumbasis leicht ausgelesen werden kann. Im sichtbaren Spektralbereich erscheinen die lasermodifizierten Bereiche 20 und die unmodifizierten Bereiche dagegen mit im Wesentlichen gleichem Farbeindruck und gleicher Helligkeit, so dass die Kennzeichnung 12 mit bloßem Auge nicht sichtbar ist.

Eine Besonderheit der Erfindung liegt darin, dass die Lasermodifikation des Merkmalsstoffs mit kurzen Laserpulsen und bei einer anderen Wellenlänge als der Wellenlänge seiner maximalen Absorption erfolgt. Beispielsweise ist die Kennzeichnung 12 im Ausführungsbeispiel bei einer Wellenlänge von etwa 1,06 µm und mit Laserpulsen einer Pulslänge zwischen 6 ns bis 30 ns in die Merkmalsschicht 16 eingebracht.

Fig. 3 zeigt dazu schematisch das Reflexionsspektrum eines für die Erfindung geeigneten infrarotabsorbierenden Merkmalsstoffs vor und nach der Laserbeaufschlagung mit dem Markierungslaser. Die in willkürlichen Einheiten angegebene Reflektivität ist dabei jeweils im Spektralbereich von 400 nm bis 1200 nm dargestellt. Das Reflexionsspektrum des Merkmalsstoffs vor der Laserbeaufschlagung bzw. außerhalb der beaufschlagten Bereiche wird durch die durchgezogene Kurve 30 beschrieben. Wie aus Fig. 3 ersichtlich, weist der Merkmalsstoff in diesen Bereichen ein ausgeprägtes Absorptionsmaximum bei etwa 850 nm auf, das im dargestellten Reflexionsspektrum als Minimum der Reflektivität R, angezeigt durch den Pfeil 32, in Erscheinung tritt.

Die Laserbeaufschlagung erfolgt mit kurzen Pulsen bei einer Wellenlänge von 1,064 µm, angedeutet durch den Pfeil 34, also deutlich außerhalb des Absorptionsmaximums des Merkmalsstoffs. Die Reflektivität R der Markierungsschicht 16 mit dem Merkmalsstoff beträgt bei dieser Wellenlänge bereits etwa 95%. Trotz der geringen Absorption ändert sich durch die Laserbeaufschlagung überraschend die Absorption und Reflexion des Merkmalsstoffs im Absorptionsmaximum bei 850 nm signifikant. Das Reflexionsspektrum des Merkmalsstoffs nach der Laserbeaufschlagung ist in Fig. 3 durch die gestrichelte Kurve 36 dargestellt.

Wie der Fig. 3 zu entnehmen, können die modifizierten Bereiche 20 und die unmodifizierten Bereiche leicht anhand ihrer unterschiedlichen Reflexion im nahen Infrarot, etwa bei einer Wellenlänge von 850 nm, unterschieden werden. Die Unterschiede im sichtbaren Spektralbereich sind dagegen klein und im Ausführungsbeispiel der Figuren 1 und 2 darüber hinaus durch die Überdruckschicht 18 maskiert.

Die erfindungsgemäße Maßnahme bietet eine Reihe von Vorteilen. So ist die Auswahl lasermodifizierbarer Merkmalsstoffe nicht mehr auf Stoffe beschränkt, die bei der Laserwellenlänge eine hohe Absorption aufweisen. Auch wird durch die kurzen Pulse eine nur geringe thermische Belastung des Schichtaufbaus und des Substrats bei der Laserung ermöglicht. Weiter kann die Wellenlänge des Markierungslasers so gewählt werden, dass andere Elemente des Schichtaufbaus durch die Laserstrahlung nicht angegriffen werden.

Beispielsweise kann durch den größeren Abstand der Wellenlänge des Markierungslasers bei 1,06 µm zum sichtbaren Spektralbereich sichergestellt werden, dass unverändert zu erhaltende Farbschichten durch die Laserung nicht beeinflusst werden. Die Gefahr einer solchen Beeinflussung ist bei Einsatz eines Markierungslasers im Absorptionsmaximum des Merkmalsstoffs (850 nm) aufgrund der größeren Nähe zum sichtbaren Spektralbereich wesentlich höher.

Als kurze Pulse werden im Rahmen der Erfindung Pulse bezeichnet, bei denen die Pulslänge kleiner als die charakteristische Zeit für die Wärmediffusion in der Markierungsschicht ist, wie weiter oben genauer beschrieben.

Der genaue Mechanismus, mit dem die kurzen Laserpulse die beschriebene Modifikation des Reflexionsspektrums abseits der Laserwellenlänge erzeugen, ist nicht bekannt. Ohne an eine bestimmte Erklärung gebunden zu sein, wird gegenwärtig vermutet, dass dabei nichtlineare Effekte, die durch die hohe Laserintensität der kurzen Pulse entstehen, eine wesentliche Rolle spielen. Als nichtlineare Effekte kommen beispielsweise 2-Photonen-Prozesse infrage, oder die Erzeugung freier Elektronen in der Anfangsphase des Laserpulses, verbunden mit einer nachfolgend erhöhten Absorption durch die ionisierte Oberflächenschicht.

Der Merkmalsstoff kann durch die kurzen Laserpulse entfernt oder ablatiert werden, oder durch die deponierte Energie beispielsweise auch in seinen chemischen Bindungen so verändert werden, dass die beobachtete Änderung der Reflexionseigenschaften resultiert.

Gute Ergebnisse wurden mit Markierungslasern mit Wellenlängen bei etwa 1,06 µm, wie beispielsweise Nd:YAG-Lasern, Nd:YVO-Lasern oder Yb:Glas-Faserlasern, erzielt, wobei die bevorzugten Laserpulslängen durchweg unterhalb von 100 ns lagen. Besonders gute Ergebnisse wurden mit Laserpulslängen zwischen etwa 6 ns und 30 ns erreicht, wobei jedoch auch kürzere Pulslängen im einstelligen Nanosekundenbereich oder sogar im Picosekunden- oder Femtosekundenbereich in Betracht kommen. Die Pulslänge wird dabei, wie üblich, als die Breite des Pulses bei halber Maximalintensität definiert.

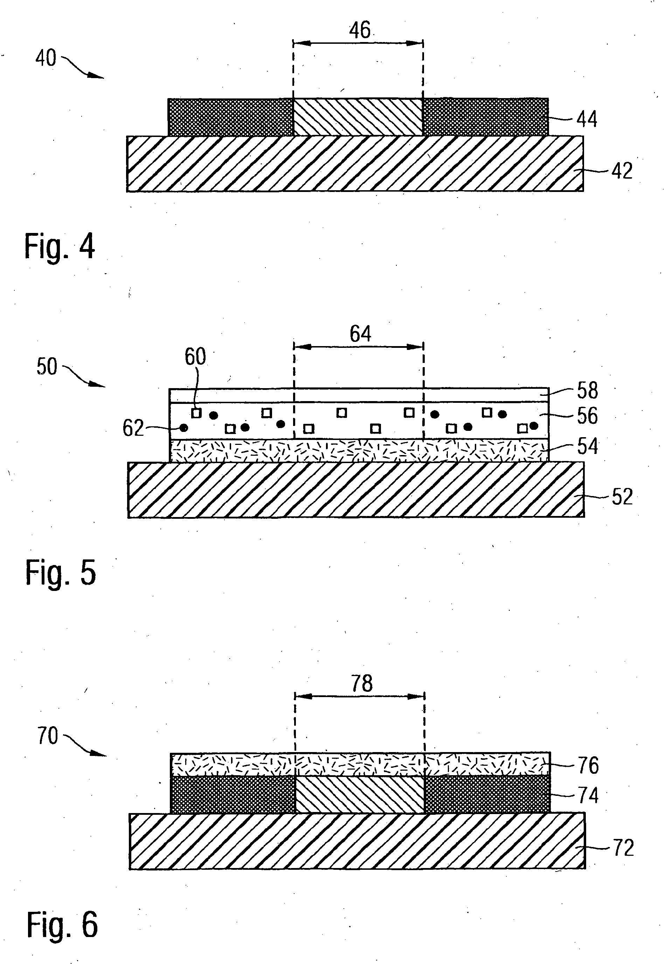

Nachfolgend werden mit Bezug auf die Figuren 4 bis 8 weitere Ausgestaltungen der Erfindung mit verschiedenen Markierungsschichten und verschiedenen Schichtaufbauten beschrieben.

Der einfachste erfindungsgemäß infrage kommende Schichtaufbau 40 ist in Fig. 4 dargestellt. Auf ein Substrat 42, das beispielsweise ein Banknotenpapier, eine Folie, ein Kartenkörper oder auch ein Papier-Folien-Laminat sein kann, ist dabei eine Markierungsschicht 44 aufgebracht, vorzugsweise aufgedruckt. Die Markierungsschicht 44 enthält einen lasermodifizierbaren Merkmalsstoff, der durch Beaufschlagung eines Bereichs 46 der Markierungsschicht mit kurzen Laserpulsen lokal in seinen Absorptions- bzw. Reflexionseigenschaften verändert wird. Die Änderung im Bereich 46 kann dann visuell und/oder maschinell erfasst werden.

Ein weiteres Ausführungsbeispiel der Erfindung ist in Fig. 5 dargestellt. Der dort gezeigte Schichtaufbau 50 umfasst ein Substrat 52, eine Druckschicht 54, eine Markierungsschicht 56 und eine optionale Schutzschicht 58. Bei der Druckschicht 54 kann es sich beispielsweise um eine Offset- oder Indirektschicht handeln, die mit der Laserstrahlung nicht reagiert. Die Markierungsschicht 56 besteht im Ausführungsbeispiel aus einer Mischung einer Stichfarbe 60 mit einem geeigneten Merkmalsstoff 62, beispielsweise dem lasermodifizierbaren Infrarotabsorber der Fig. 3.

Durch Beaufschlagung von Bereichen 64 der im Stichtiefdruck aufgedruckten Markierungsschicht 56 mit der gepulsten Strahlung eines Infrarotlasers, im Ausführungsbeispiel eines diodengepumpten Yb:Glas-Faserlaser einer Wellenlänge λ von 1,06 µm, einer Pulslänge zwischen 20 und 30 ns, einer Pulsfrequenz von 30 kHz oder mehr und einer mittleren Leistung von 10 bis 20 W, wird der Merkmalsstoff 62 bereits durch einen einzigen Laserpuls in seinen Absorptionseigenschaften ausreichend verändert, um nachfolgend ein maschinelles Auslesen der eingebrachten Kennzeichnung zu erlauben.

Da für jedes geschriebene Informationsbit so nur ein einziger Laserpuls erforderlich ist, können sehr hohe Markierungsgeschwindigkeiten erzielt werden, wie sie für die Erzeugung komplexer Kennzeichnungen, wie etwa kryptographisch sicher verschlüsselter Matrixcodes, mit der Geschwindigkeit moderner Banknoten-Drucklinien (10.000 Bogen/Stunde) erforderlich sind.

Vor allem wenn die Druckschicht 54 einen hohen Anteil dunkler Farbe enthält, kann es vorkommen, dass die eingeschriebene Kennzeichnung durch die Oberflächenveränderung der Markierungsschicht 56 schwach sichtbar wird. Dies kann allerdings dadurch verhindert werden, dass die Markierungsschicht mit einer Schutzschicht 58 versehen wird, die der gesamten Oberfläche einen einheitlichen Glanzeindruck verleiht. Durch eine solche Schutzschicht wird die Kennzeichnung darüber hinaus gut vor Verschmutzung geschützt, so dass ihre Maschinenlesbarkeit für einen langen Zeitraum gewährleistet ist.

Eine andere Möglichkeit, das schwache Sichtbärwerden der eingeschriebenen Kennzeichnung durch die Oberflächenveränderung zu verhindern, besteht darin, die Schichtenfolge nach der Laserbeaufschlagung kurzzeitig zu erhitzen, so dass das Bindemittel der Markierungsschicht an der Oberfläche erweicht, leicht fließt und eventuelle Oberflächenveränderungen ausgleicht.

Die Markierungsschicht kann auch unterhalb von weiteren tarnenden Druckschichten angeordnet sein, wie anhand der Schichtenfolge 70 der Fig. 6 illustriert. Dort ist auf ein Substrat 72 ein Merkmalsstoff als Vollfläche 74 gedruckt, welche ausreichend groß gewählt ist, um die Laserkennzeichnung aufzunehmen. Dann wurde die so erzeugte Markierungsschicht 74 mit mindestens einem Druckverfahren, beispielsweise mit Indirektdruck, und mit einer Farbe, die mit der Strahlung des Markierungslasers nicht reagiert, überdruckt (Bezugszeichen 76). Nachfolgend wurde durch Laserbeaufschlagung die Infrarotabsorption des Merkmalsstoffs in einem Teilbereich 78 der Markierungsschicht 74 verändert, ohne die darüber liegende Überdruckschicht 76 zu beeinflussen. Die Überdruckschicht 76 stellt ebenfalls sicher, dass die Kennzeichnung auch bei eventuellen leichten Oberflächenveränderungen der Markierungsschicht 74 visuell nicht erkannt werden kann.

Der Überdruck 76 kann beispielsweise aus Guillochen bestehen. Auch können eine oder mehrere weitere Schichten über der Überdruckschicht 76 aufgebracht werden, wie etwa ein Stichtiefdruck-Portrait. Die vollflächige Markierungsschicht 74 kann neben dem Merkmalsstoff auch weitere Farb- und/ oder Sicherheitspigmente, wie etwa optisch variable Farbpigmente oder magnetische Pigmente, enthalten.

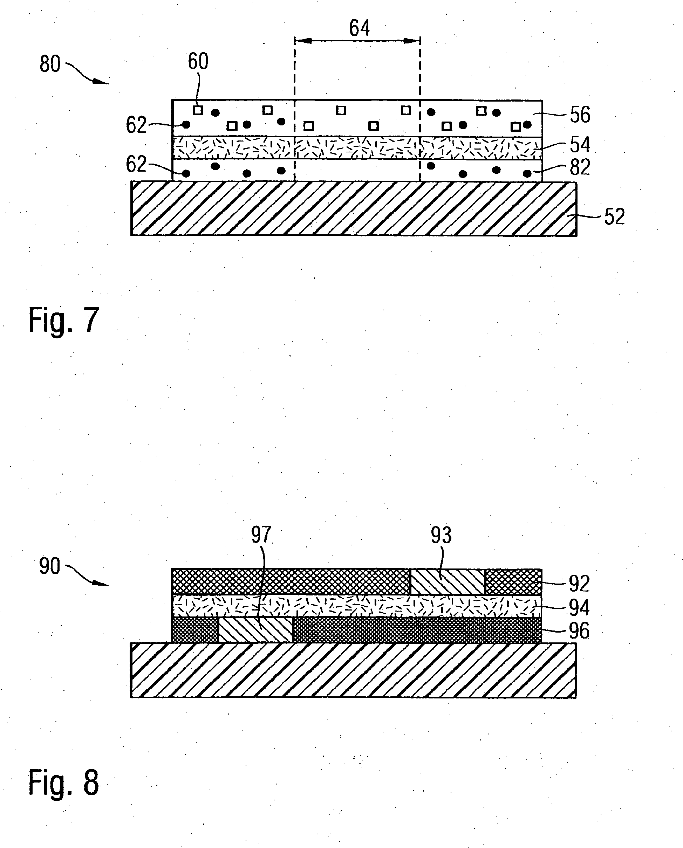

Wird die Markierungsschicht wie in Fig. 5 im Stichtiefdruck aufgebracht, ist die Infrarotabsorption des Merkmalsstoffs aufgrund der Strukturweite des Stichtiefdrucks in der Regel nicht flächig konstant, was das maschinelle Auslesen der eingeschriebenen Kennzeichnung erschweren kann. Zur Abhilfe kann zusätzlich zu der Stichtiefdruckschicht eine vollflächige Druckschicht mit dem Merkmalsstoff aufgebracht werden, wie in dem Ausführungsbeispiel der Fig. 7 illustriert.

Die dort gezeigte Schichtenfolge 80 enthält neben den bereits in Zusammenhang mit der Fig. 5 beschriebenen Schichten eine mit einem Untergrunddruckverfahren aufgebrachte Zusatzschicht 82, die ebenfalls den Merkmalsstoff 62 enthält. Da die Druckschicht 54 für die Strahlung des Markierungslasers durchlässig ist, wird der Merkmalsstoff 62 durch die Laserbeaufschlagung sowohl in der Markierungsschicht 56 als auch in der zusätzlichen vollflächigen Druckschicht 82 modifiziert. Das Erscheinungsbild der eingeschriebenen Kennzeichnung wird durch die Zusatzschicht 82 homogenisiert und die maschinelle Auslesesicherheit erhöht. Es versteht sich, dass auch die Zusatzschicht 82 neben dem Merkmalsstoff auch weitere Farb- und/oder Sicherheitspigmente enthalten kann.

Bei einer weiteren Erfindungsvariante sind unterschiedliche Markierungsschichten in einer Schichtenfolge kombiniert. Fig. 8 zeigt zur Illustration eine Schichtenfolge 90 mit einer ersten Markierungsschicht 92, einer tarnenden Überdruckschicht 94 und einer zweiten Markierungsschicht 96. Die beiden Markierungsschichten 92, 96 enthalten unterschiedliche Merkmalsstoffe, die jeweils durch Beaufschlagung mit Laserpulsen unterschiedlicher Länge modifiziert werden können.

Beispielsweise kann der Merkmalsstoff der ersten Markierungsschicht 92 so gewählt sein, dass er bereits bei längeren Pulsdauern, beispielsweise etwa 50 ns, mit der Laserstrahlung reagiert, während zur Modifizierung des Merkmalsstoffs der zweiten Markierungsschicht 96 kürzere Laserpulse, beispielsweise etwa 10 ns, erforderlich sind.

In eine derartige Schichtenfolge 90 können dann in einem ersten Schritt mit längeren Laserpulsen (50 ns) erste Kennzeichnungen 93 in die Markierungsschicht 92 eingebracht werden. Die zweite Markierungsschicht 96 wird in diesem Schritt nicht verändert, da die Intensität der längeren Pulse nicht ausreicht, um deren Merkmalsstoff zu modifizieren. In einem zweiten Schritt wird dann mit kürzeren Pulsen (10 ns) eine zweite Kennzeichnung 97 in die Markierungsschicht 96 eingebracht. Die erste Markierungsschicht 92 kann in diesem Schritt ebenfalls verändert werden oder unverändert bleiben.

Von den Kennzeichnungen 93 und 97 können eine oder beide im sichtbaren Spektralbereich unsichtbar bleiben. Beispielsweise kann die Kennzeichnung 93 der oberen Markierungsschicht 92 im sichtbaren Spektralbereich erkennbar sein, während die getarnte Kennzeichnung 97 der unteren Markierungsschicht 96 nur maschinell im nahen Infrarot ausgelesen werden kann. Auch die umkehrte Anordnung der ersten und zweiten Markierungsschicht ist denkbar, so dass die obere Markierungsschicht mit kurzen, die untere Markierungsschicht mit längeren Laserpulsen modifiziert wird. Laserpulse verschiedener Länge können oft ohne großen Aufwand mit einem einzigen Lasersystem erreicht werden, da bei vielen Lasersystemen eine Erhöhung der Pulsrate mit einer Verlängerung der Pulsdauern einhergeht.

Die Erfassung der eingeschriebenen Kennzeichnungen kann mithilfe einer Kamera, beispielsweise mit einem CCD- oder CMOS-Detektor, erfolgen. Geeignete Filter (Langpass, Kurzpass, Bandpass, insbesondere schmalbandige Interferenzfilter) können den Kontrast zwischen lasermodifizierten und unmodifizierten Bereichen deutlich erhöhen. Auch kann eine nachgeschaltete Bildverarbeitung das erfasste Rohbild vor der Auswertung weiter verbessern.

Zur Erhöhung der Lesesicherheit können auch verschiedene dem Fachmann bekannte Fehlerkorrektur-Algorithmen eingesetzt werden, bei denen beispielsweise durch gezieltes Hinzufügen von Redundanz eventuelle spätere Lesefehler korrigiert werden können.

Das Reflexionsverhalten des Merkmalsstoffs kann auch bei mehr als einer Wellenlänge ausgewertet werden, um zwischen verschiedenen Merkmalsstoffen unterscheiden zu können. Wie aus Fig. 3 ersichtlich, ändert die Differenz der Reflektivitäten der modifizierten und unmodifizierten Bereiche zwischen 400 nm und 1000 nm mehrfach das Vorzeichen. Die Wellenlängen, bei denen diese Vorzeichenwechsel stattfinden, bzw. das Verhältnis der Reflektivitäten bei bestimmten, vorgewählten Wellenlängen ist charakteristisch für den jeweils eingesetzten Merkmalsstoff. Werden Detektoren verwendet, die aus anderen Materialien als Silizium bestehen, wie etwa ein InGaAs-Detektor, lässt sich das Reflexionsverhalten auch bei größeren Wellenlängen als 1000 nm auswerten.

Um eine sichere Kennzeichnung von Banknoten zu erreichen, kann beispielsweise wie folgt vorgegangen werden:

Zunächst wird bei der Banknotenproduktion die Zifferung einer Banknote auf dem Bogen mithilfe einer Kamera und elektronischer Bildverarbeitung gelesen bzw. berechnet. Außerdem wird ein im Sichtbaren nicht erkennbarer Batchcode, der je Nutzen auf dem Banknotenbogen verschieden ist, gelesen oder berechnet. Bei einer anderen Möglichkeit wird je Bogen, der in das Produktionsaggregat einläuft, nur eine Ziffer und ein Batchcode gelesen und die Werte für die restlichen Nutzen auf dem Bogen werden aus den gelesenen Werten berechnet. In einer weiteren Variante überträgt eine Steuereinheit der Nummeriermaschine die Ziffern an das Rechnersystem für die Laserkennzeichnung und nur der Batchcode wird mit der Kamera erfasst und gelesen.

Aus der Banknotenziffer und dem ermittelten Batchcode wird dann mittels eines geheimen Schlüssels und eines geeigneten Verschlüsselungsalgorithmus, wie etwa RSA, DSA, Elliptische-Kurven oder dergleichen, eine Signatur berechnet, in eine zweidimensionale Codierung gewandelt und als Kennzeichnung in der oben geschilderten Weise in die Markierungsschicht eingeschrieben. Die Signatur kann beispielsweise 40 Nutzbytes oder mehr aufweisen, um nach heutigem Stand der Kryptographie als sicher zu gelten.

Zur weiteren Erhöhung der Fälschungssicherheit können in die Signatur noch statistische Daten aus der einzelnen Banknote einfließen, wie beispielsweise Schnitttoleranzen, Positionstoleranzen zwischen den verschiedenen Druckverfahren, eine Verteilung von Melierfasern und dergleichen.

Ein einfacherer und auch von schnell laufenden Banknotenbearbeitungsmaschinen lesbarer Code kann beispielsweise nur bis zu 10 Nutzbytes enthalten und ohne aufwändige Verschlüsselung in die Markierungsschicht eingeschrieben werden. Dabei kann beispielsweise die Seriennummer der Banknote ganz oder teilweise im visuell nicht sichtbaren Code abgelegt werden oder auch andere Logistikdaten.

Eine weitere Anwendung der erfindungsgemäßen Kennzeichnung besteht in der Verwendung als intelligentem Infrarot-Feinst-Farbschnitt. Grundsätzlich entsteht Infrarotfarbschnitt dadurch, dass beispielsweise im Stichtiefdruck ein Motiv mit zwei im visuellen Spektralbereich identischen Farben gedruckt wird, die sich im Infrarotspektrum unterscheiden, so dass das Motiv nur durch Aufnahmen im Infrarotbereich erfassbar ist. Herkömmliche Farbschnitte werden durch sich überlappende Farbschablonen erzeugt, so dass die Form und Information des Farbschnitts nur relativ grob ausfallen kann. Außerdem werden für die Produktion des herkömmlichen Farbschnitts zwei Farbwerke benötigt, was die Anzahl der für das Design verfügbaren Buntfarben einschränkt.

Mit der oben beschriebenen Laser-Modifikation ist es nun möglich, sehr fein strukturierte Information im Infrarotbereich einzubringen, die als Aufhellung bei Betrachtung im infraroten Spektralbereich, beispielsweise bei 850 nm, sichtbar werden. Es können beispielsweise Graphik- und Bildmotive, optische Codes, Schriftzeichen, etc. umgesetzt werden. Es können sowohl Vektor- als auch Pixel/ Bitmap-Beschriftungsverfahren angewandt werden. Das Verfahren wird vorzugsweise auf im Stichtiefdruck vorgedruckte Bereiche angewandt, wobei die Stichtiefdruckfarben als Beimischung den infrarotabsorbierenden Merkmalsstoff enthalten. Es ist aber auch denkbar, alle andern Druckverfahren für den Vordruck der Farbschnittfläche zu benutzen, wie etwa Simultandruck, indirekten Hochdruck, Siebdruck, Offsetdruck, Tiefdruck und dergleichen.

Vorteilhaft ist dabei ein dichtes Muster des Vordrucks oder gar eine Vollfläche (Untergrunddruck), um detaillierte Farbschnittmuster erkennbar zu machen. Aber auch in einem Stichportrait besteht die Möglichkeit, feine Farbschnittdetails darzustellen. Auch ein Banknotenfenster, ein metallischer Streifen öder eine Folien-Applikation kann als Träger der Markierungsschicht dienen. Bei einem Banknotenfenster kann auf diese Weise beispielsweise ein von beiden Seiten her lesbarer Code erzeugt werden.

Ein besonderer Vorteil eines solchen Laser-Farbschnitt-Verfahrens besteht darin, dass ein zusätzliches Farbwerk für eine beliebige Buntfarbe frei wird und dass durch die Verwendung eines speziellen Infrarotabsorbers auch die Anwendung des Farbschnitts für helle Farbtöne machbar wird. Ein weiterer Vorteil ist die verschiedenartige Beschriftung identischer Banknoten, um sie bei der späteren Sortierung trennen zu können.

Im Passbereich kann mit der beschriebenen Vorgehensweise ein verstecktes Bild des Inhabers im Infrarotbereich erzeugt werden - eine Wiederholung des Passbildes, das nur im Infraroten sichtbar wird. Es ist selbstverständlich auch denkbar, eine Kombination aus klassischem Farbschnitt und Laser-Feinst-Farbschnitt anzufertigen.

Eine weitere Anwendung der Lasermarkierung besteht in der Fälschungssicherung von Produkten. Verschiedene Merkmale eines Produkts, wie etwa Artikelnummer, Seriennummer, Herstelldatum, Produktionsstätte und dergleichen, können als Signatur verschlüsselt und in der visuell und/oder maschinell erkennbaren Kennzeichnung untergebracht werden. Auch hier kann eine Verknüpfung der Daten mit statistischen Merkmalen des Produkts erfolgen. Die Kennzeichnung kann auf ein Label, die Verpackung oder im Einzelfall auch auf das Produkt selbst aufgebracht werden.

Im Ticketing-Bereich können charakteristische Daten, wie etwa die Bezeichnung der Veranstaltung, der Veranstaltungsort, Datum, Zeit, Preis, Sitzplatznummer, Name des Inhabers oder dergleichen, verschlüsselt auf der Eintrittskarte abgelegt werden.

Auch für automatisch ausgegebene und angenommene Wertgutscheine, wie sie zunehmend von Supermarktketten eingesetzt werden, ist die Erfindung von Vorteil. Beispielsweise kann in einem Ausgabeautomaten auf einen Wertgutschein eine Kennzeichnung der beschriebenen Art aufgebracht werden, die Daten, wie den Wert des Gutscheins, eine Gutscheinnummer, das Ausstellungsdatum, die Ausgabestelle, das ausgebende Unternehmen und dergleichen, enthält. Nach Prüfung der Kennzeichnung kann dann die Annahme gefälschter oder verfälschter Gutscheine von einem entsprechenden Annahmeautomaten abgelehnt werden.

## Patentansprüche

1. Verfahren zum Herstellen eines Datenträgers (10) mit einer visuell und/ oder maschinell erkennbaren Kennzeichnung (12) in Form von Mustern, Buchstaben, Zahlen oder Bildern, bei dem
- ein Datenträger mit einem Datenträgersubstrat (14, 42, 52, 72) bereitgestellt wird und
- eine Markierungsschicht (16, 44, 56) auf das Datenträgersubstrat (14, 42, 52, 72) aufgebracht wird,
mit den Merkmalen, dass
- die Kennzeichnungen durch Lasermodifikation eines lasermodifizierbaren Merkmalsstoffs (62) in der Markierungsschicht (16, 44, 56) mittels kurzer Laserpulse in die Markierungsschicht eingebracht werden,
- die Kennzeichnungen (12) mit einem Markierungslaser bei einer Wellenlänge eingebracht werden, bei der der lasermodifizierbare Merkmalsstoff (62) im Wesentlichen keine Absorption aufweist, die Kennzeichnungen im sichtbaren Spektralbereich nicht erkennbar sind und im nahen Infrarot in einem Wellenlängenbereich zwischen 780 nm und 1000 nm erfassbar sind,
- wobei der Merkmalsstoff (62) ein Infrarotabsorber mit einem Absorptionsmaximum im nahen Infrarot ist und die Kennzeichnungen mit einem Markierungslaser im infraroten Spektralbereich mit einem Markierungslaser einer Wellenlänge von etwa 1,06 µm eingebracht werden.

2. Verfahren nach Anspruch 1, **dadurch gekennzeichnet, dass** die Kennzeichnungen mit einem Markierungslaser bei einer Wellenlänge eingebracht werden, die nicht dem Absorptionsmaximum des lasermodifizierbaren Merkmalsstoffs entspricht.

3. Verfahren nach einem der Ansprüche 1 oder 2, **dadurch gekennzeichnet, dass** die Pulslänge der kurzen Laserpulse kleiner als die charakteristische Zeit der Wärmediffusion in der Markierungsschicht gewählt wird.

4. Verfahren nach einem der Ansprüche 1 bis 3, **dadurch gekennzeichnet, dass** die Kennzeichnungen mit Laserpulsen einer Pulslänge von weniger als 100 ns, bevorzugt weniger von als 50 ns, besonders bevorzugt von weniger als 30 ns, in die Markierungsschicht eingebracht werden.

5. Datenträger (10), insbesondere Wertdokument oder Sicherheitspapier, mit einem Substrat (14, 42, 52, 72) und einer auf dem Substrat aufgebrachten Markierungsschicht (16, 44, 56), in die durch Einwirkung von Laserstrahlung visuell und/oder maschinell erkennbare Kennzeichnungen (12) in Form von Mustern, Buchstaben; Zahlen oder Bildern eingebracht sind, wobei die Markierungsschicht (16, 44, 56) zumindest einen lasertransparenten Stoff und einen lasermodifizierten Merkmalstoff (62) enthält, der lasermodifizierte Merkmalstoff bei der Laserwellenlänge im Wesentlichen keine oder nur eine geringe Absorption aufweist und der Datenträger nach dem Verfahren gemäß einem der Ansprüche 1 bis 4 erhältlich ist.

6. Datenträger nach Anspruch 5, **dadurch gekennzeichnet, dass** die Markierungsschicht ein Gemisch aus einer lasertransparenten Gemischkomponente einer durch die Laserstrahlung modifizierten Gemischkomponente aufweist.

7. Datenträger nach Anspruch 5, **dadurch gekennzeichnet, dass** die Markierungsschicht eine Schichtenfolge aus zwei oder mehr Schichten darstellt, wobei zumindest eine erste Schicht (18, 76) für die Laserstrahlung transparent und zumindest eine zweite Schicht (16, 74) durch die Laserstrahlung modifiziert ist.

8. Datenträger nach Anspruch 7, **dadurch gekennzeichnet, dass** die Markierungsschicht eine Schichtenfolge aus zwei oder mehr Schichten darstellt, wobei eine erste, für die Laserstrahlung transparente Schicht (18, 76) über einer zweiten, durch die Laserstrahlung modifizierten Schicht (16, 74) angeordnet ist.

9. Datenträger nach wenigstens einem der Ansprüche 5 bis 8, **dadurch gekennzeichnet, dass** die Markierungsschicht (56) über einer visuell sichtbaren Druckschicht (54) angeordnet ist.

10. Datenträger nach wenigstens einem der Ansprüche 5 bis 9, **dadurch gekennzeichnet, dass** die Markierungsschicht durch eine Stichtiefdruckschicht gebildet ist.

11. Datenträger nach wenigstens einem der Ansprüche 5 bis 10, **dadurch gekennzeichnet, dass** die Markierungsschicht durch eine vollflächige Druckschicht (74) gebildet ist.

## Claims

1. A method for manufacturing a data carrier (10) having visually and/ or machine-perceptible identifiers (12) in the form of patterns, letters, numbers or images, comprising the steps of
- providing a data carrier having a data carrier substrate (14, 42, 52, 72) and
- applying a marking layer (16, 44, 56) to the data carrier substrate (14, 42, 52, 72),
having the features that
- the identifiers are introduced into the marking layer by laser modification of a laser-modifiable feature substance (62) in the marking layer (16, 44, 56) by means of short laser pulses,
- the identifiers (12) are introduced with a marking laser emitting radiation at a wavelength at which the laser-modifiable feature substance (62) has substantially no radiation absorption, the identifiers are not perceptible in the visible spectral range and are perceptible in the near infrared in a wavelength range between 780 nm and 1000 nm,
- wherein the laser-modifiable feature substance (62) is an infrared absorber having an absorption maximum in the near infrared, and wherein the identifiers are introduced with a marking laser emitting radiation in the infrared spectral range, with a marking laser emitting radiation having a wavelength of about 1.06 µm.

2. The method according to claim 1, **characterized in that** the identifiers are introduced with a marking laser emitting radiation with a wavelength that does not correspond to the absorption maximum of the laser-modifiable feature substance.

3. The method according to any one of claims 1 to 2, **characterized in that** the pulse length of the short laser pulses is chosen to be less than the characteristic time of heat diffusion in the marking layer.

4. The method according to any one of claims 1 to 3, **characterized in that** the identifiers are introduced into the marking layer with laser pulses of a pulse length of less than 100 ns, preferably of less than 50 ns, particularly preferably of less than 30 ns.

5. A data carrier (10), especially a value document or security paper, having a substrate (14, 42, 52, 72) and a marking layer (16, 44, 56) applied on the substrate, into which visually and/or machine-perceptible identifiers (12) in the form of patterns, letters, numbers or images are introduced by the action of laser radiation, wherein the marking layer (16, 44, 56) includes at least one laser-transparent substance and one laser-modified feature substance (62), wherein the laser-modified feature substance has substantially no or only a low absorption at the laser wavelength and wherein the data carrier is obtainable according to the method of one of claims 1 to 4.

6. The data carrier according to claim 5, **characterized in that** the marking layer comprises a mixture having a laser-transparent mixture component and a mixture component modified by the laser radiation.

7. The data carrier according to claim 5, **characterized in that** the marking layer comprises a sequence of two or more layers, at least a first layer (18, 76) being transparent to the laser radiation and at least a second layer (16, 74) being modified by the laser radiation.

8. The data carrier according to claim 7, **characterized in that** the marking layer comprises a sequence of two or more layers, a first layer (18, 76) that is transparent to the laser radiation being disposed over a second layer (16, 74) that is modified by the laser radiation.

9. The data carrier according to any one of claims 5 to 8, **characterized in that** the marking layer (56) is disposed over a visually visible printing layer (54).

10. The data carrier according to any one of claims 5 to 9, **characterized in that** the marking layer is formed by an intaglio printing layer.

11. The data carrier according to any one of claims 5 to 10, **characterized in that** the marking layer is formed by a contiguous printing layer (74).

## Revendications

1. Procédé pour la fabrication d'un support de données (10) avec un marquage (12) pouvant être reconnu visuellement et/ou automatiquement sous la forme de motifs, de lettres, de chiffres ou d'images, dans lequel
- un support de données avec un substrat de support de données (14, 42, 52, 72) est mis à disposition, et
- une couche de marquage (16, 44, 56) étant appliquée sur le substrat de support de données (14, 42, 52, 72),
avec les caractéristiques suivantes :
- les marquages sont introduits dans la couche de marquage par modification laser d'une substance à caractère distinctif (62) modifiable par laser dans la couche de marquage (16, 44, 56) à l'aide d'impulsions laser courtes,
- les marquages (12) avec un laser de marquage étant introduits avec une longueur d'onde, avec laquelle la substance à caractère distinctif (62) modifiable par laser ne présente sensiblement aucune absorption, les marquages n'étant pas visibles dans la plage spectrale visible et pouvant être détectés sous infrarouge proche dans une plage de longueurs d'ondes comprise entre 780 nm et 1000 nm,
- moyennant quoi la substance à caractère distinctif (62) est un absorbeur d'infrarouge avec un maximum d'absorption dans l'infrarouge proche et les marquages étant introduits avec un laser de marquage dans la plage spectrale infrarouge avec un laser de marquage d'une longueur d'onde de près de 1,06 µm.

2. Procédé selon la revendication 1, **caractérisé en ce que** les marquages sont introduits avec un laser de marquage avec une longueur d'onde, laquelle ne correspond pas au maximum d'absorption de la substance à caractère distinctif modifiable par laser.

3. Procédé selon l'une des revendications 1 ou 2, **caractérisé en ce que** la longueur d'impulsion des impulsions laser courtes est choisie de manière à être inférieure au temps caractéristique de la diffusion thermique dans la couche de marquage.

4. Procédé selon l'une des revendications 1 à 3, **caractérisé en ce que** les marquages sont introduits avec des impulsions laser d'une longueur d'impulsion de moins de 100 ns, de préférence de moins de 50 ns, de manière particulièrement préférée de moins de 30 ns, dans la couche de marquage.

5. Support de données (10), en particulier document de valeur ou papier de sécurité, avec un substrat (14, 42, 52, 72) et une couche de marquage (16, 44, 56) appliquée sur le substrat, dans lequel des marquages (12) reconnaissables visuellement et/ou automatiquement sous la forme de motifs, lettres, chiffres ou images sont introduits sous l'effet d'un rayonnement laser, moyennant quoi la couche de marquage (16, 44, 56) contient au moins une substance transparente au laser et une substance à caractère distinctif (62) modifiée par laser, la substance à caractère distinctif modifiée par laser ne présentant sensiblement aucune absorption ou seulement une faible absorption avec la longueur d'onde, et le support de données pouvant être obtenu selon le procédé selon l'une des revendications 1 à 4.

6. Support de données selon la revendication 5, **caractérisé en ce que** la couche de marquage présente un mélange d'un composant de mélange transparent au laser d'un composant de mélange modifié par le rayonnement laser.

7. Support de données selon la revendication 5, **caractérisé en ce que** la couche de marquage représente une succession de couches à base de deux ou davantage de couches, moyennant quoi au moins une première couche (18, 76) est transparente pour le rayonnement laser et au moins une deuxième couche (16, 74) étant modifiée par le rayonnement laser.

8. Support de données selon la revendication 7, **caractérisé en ce que** la couche de marquage représente une succession de couches à base de deux ou davantage de couches, moyennant quoi une première couche (18, 76) transparente pour le rayonnement laser est disposée par-dessus une deuxième couche (16, 74) modifiée par le rayonnement laser.

9. Support de données selon l'une au moins des revendications 5 à 8, **caractérisé en ce que** la couche de marquage (56) est disposée par-dessus une couche d'impression (54) visible visuellement.

10. Support de données selon l'une au moins des revendications 5 à 9, **caractérisé en ce que** la couche de marquage est formée par une couche d'impression en taille douce.

11. Support de données selon l'une au moins des revendications 5 à 10, **caractérisé en ce que** la couche de marquage est formée par une couche d'impression (74) sur toute la surface.
